Europäisches Patentamt

European Patent Office

Office européen des brevets

(19)

(11) **EP 1 200 359 B1**

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(21) Anmeldenummer: **00943769.0**

(22) Anmeldetag: **06.06.2000**

(51) Int Cl.$^{7}$: **C02F 1/78**

(86) Internationale Anmeldenummer:
**PCT/EP2000/005166**

(87) Internationale Veröffentlichungsnummer:
**WO 2000/078682 (28.12.2000 Gazette 2000/52)**

(54) **VERFAHREN ZUM ABBAU ORGANISCHER VERBINDUNGEN IN WASSER**

METHOD OF DECOMPOSING ORGANIC COMPOUNDS IN WATER

PROCEDE DE DEGRADATION DE COMPOSES ORGANIQUES DANS L'EAU

(84) Benannte Vertragsstaaten:
**AT BE CH CY DE DK ES FI FR GB GR IE IT LI LU MC NL PT SE**

(30) Priorität: **18.06.1999 DE 19927910**

(43) Veröffentlichungstag der Anmeldung:
**02.05.2002 Patentblatt 2002/18**

(73) Patentinhaber: **Bayer Aktiengesellschaft
51368 Leverkusen (DE)**

(72) Erfinder:
• **SCHWEMLER, Christoph
  D-42799 Leichlingen (DE)**
• **HEUSER, Jürgen
  D-47803 Krefeld (DE)**
• **KAUTH, Hermann
  D-47803 Krefeld (DE)**
• **KORDS, Christian
  D-47829 Krefeld (DE)**
• **HORAK, Otto
  D-51375 Leverkusen (DE)**
• **GESTERMANN, Fritz
  D-51377 Leverkusen (DE)**

(56) Entgegenhaltungen:
**DE-A- 19 640 452**

## Beschreibung

Die vorliegende Erfindung betrifft ein Verfahren zum Abbau organischer Verbindungen in Wasser, das einen TOC von mehr als 2 ppm aufweist und daneben gelöste Kohlensäure oder Carbonate enthält, durch die Behandlung mit Ozon und ein Verfahren zur Herstellung von Chlor durch Elektrolyse von Kochsalz, dadurch gekennzeichnet, dass das Kochsalz dem Elektrolyseverfahren in Form einer wässrigen Lösung zugeführt wird, die erhalten wird durch Behandlung von Wasser, das einen TOC von mehr als 2 ppm und einen Kochsalzgehalt von 2 bis 20 Gew.-% aufweist und daneben gelöste Kohlensäure oder Carbonate enthält, mit Ozon.

Verfahren zum Abbau organischer Verbindungen in Wasser durch die Behandlung des Wassers mit Ozon sind bekannt.

WO 9708101 beschreibt die Behandlung industrieller Abwässer mit Ozon in Gegenwart eines Katalysators. EP-A 634465 beschreibt die Reinigung industrieller Abwässer mit Ozon in einem Zweistufenverfahren, wobei insbesondere aromatische Verbindungen abgebaut werden. EP-A 378994 beschreibt den Abbau aromatischer Verunreinigungen in industriellen Abwässern durch Ozon bei erhöhtem Druck und erhöhter Temperatur.

Wie z. B. E. Gilbert in Water Res., Band 21 (10), Seite 1273-1278 beschreibt, dient der Einsatz von Ozon bei industriell verschmutzten Abwässern im allgemeinen der Umwandlung, von Verunreinigungen aus bakteriell nicht oder nur schlecht abbaubaren Verbindungen in bakteriell abbaubare Bestandteile. Dies bedeutet, dass auch nach der Behandlung mit Ozon organische Verbindungen im Wasser vorhanden sind, die dann in weiteren Schritten, z. B. einer biologischen Abwasserreinigung zu anorganischen Verbindungen wie z. B. Kohlendioxid und Wasser abgebaut werden müssen.

Dies bestätigt Takahashi in Ozone Science and Engineering, Band 12, 1990, Seite 1 bis 18. Takahashi beschreibt, dass die Behandlung von Wasser, das Phenol enthält, mit Ozon zwar zum Abbau des Phenols führt. Dass jedoch organische Abbauprodukte wie z. B. Oxalsäure, Glyoxal und Glyoxalsäure entstehen, die durch Ozon nicht weiter abgebaut werden.

Falls Wasser organische Verbindungen enthält, bedeutet dies einen bestimmten Gehalt an Kohlenstoff, der in Form von organischen Verbindungen vorliegt. Der Gehalt an Kohlenstoff, der in Form von organischen Verbindungen vorliegt, wird als TOC (Abkürzung von "Total Organic Carbon") bezeichnet.

Wasser, das einen TOC von mehr als 2 ppm aufweist und daneben gelöste Kohlensäure oder Carbonate enthält, ist z.B. aus der Polycarbonatherstellung bekannt.

Zur Herstellung von Polycarbonaten nach dem sogenannten Phasengrenzflächenverfahren werden Dihydroxydiarylalkane in Form ihrer in Wasser gelösten Alkalisalze mit Phosgen in heterogener Phase in Gegenwart von anorganischen Basen wie z.B. Natronlauge und einem organischen Lösungsmittel, in dem das Produkt Polycarbonat gut löslich ist, umgesetzt. Während der Reaktion ist die wässrige Phase in der organischen Phase verteilt. Nach der Synthese des Polycarbonates nach dem Phasengrenzflächenverfahren wird das Polycarbonat in Form seiner Lösung in dem bei der Synthese verwendeten organischen Lösungsmittel, beispielsweise Methylenchlorid, abgetrennt. Die verbleibende wässrige Phase wird vorteilhafterweise von leichtflüchtigen organischen Verunreinigungen, wie z. B. Reste des bei der Synthese verwendeten organischen Lösungsmittel, beispielsweise Methylenchlorid, befreit, was z. B. durch Destillation geschehen kann. Es verbleibt dann ein Abwasser mit einem hohen Gehalt an gelösten Carbonaten (beispielsweise 0,3 bis 1,5 Gew.-%) und mit einem hohen Gehalt an gelöstem Kochsalz (beispielsweise 4 bis 12 Gew.-%). Ausserdem ist das Abwasser mit organischen Verbindungen belastet wie z. B. mit Phenolen (z.B. unsubstituiertes Phenol oder Alkylphenole oder Arylphenole oder Bisphenole wie z. B. Bisphenol A) oder Aminen (z.B. Triethylamin oder Ethylpiperidin). Die Carbonate entstehen dabei z. B. durch die Hydrolyse des Phosgens als Nebenreaktion der Polycarbonatherstellung.

Das im Abwasser der Polycarbonatherstellung nach dem Phasengrenzflächenverfahren gelöste Kochsalz stellt einen wertvollen Rohstoff dar. Eine Möglichkeit zur Verwertung des Kochsalzes im Abwasser der Polycarbonatherstellung nach dem Phasengrenzflächenverfahren wurde bisher noch nicht beschrieben.

Eine denkbare Verwertung der Kochsalzfracht im Abwasser der Polycarbonatherstellung nach dem Phasengrenzflächenverfahren ist die Nutzung des Kochsalzes zur Herstellung von Chlor und Natronlauge durch Elektrolyse. Diese Möglichkeit scheiterte aber bislang an den anderen Bestandteilen, insbesondere den organischen Bestandteilen des Abwassers der Polycarbonatherstellung nach dem Phasengrenzflächenverfahren. Insbesondere das besonders vorteilhafte Membranverfahren der Chloralkalielektrolyse erfordert reine wässrige Kochsalzlösungen als Ausgangsstoff.

Falls das Kochsalz dem Elektrolyseverfahren in Form einer wässrigen Lösung zugeführt wird, muss diese wässrige Lösung einen geringen Gehalt organischer Verunreinigungen enthalten, vorzugsweise muss der TOC der Kochsalzlösung kleiner als 1 ppm sein. Selbst wenn der TOC der Kochsalzlösung kleiner als 1 ppm ist, können noch organische Verunreinigungen in geringem Ausmaß in der Kochsalzlösung vorhanden sein, die das Elektrolyseverfahren beeinträchtigen, z. B. indem die Standzeiten wesentlicher Anlagekomponenten, wie z.B. der Membranen im Falle des Membranverfahrens, herabgesetzt werden. All dies gilt insbesondere für das Membranverfahren zur Kochsalzelektrolyse, bei dem die Standzeit der Membranen ein wesentlicher, die Wirtschaftlichkeit bestimmender, Faktor ist.

Natürlich sind auch andere Abwässer als diejenigen aus der Polycarbonatherstellung bekannt, die dadurch gekennzeichnet sind, dass sie gelöste Carbonate oder Kohlensäure enthalten.

Es ist nun bekannt, dass im Wasser gelöste Carbonate oder Kohlensäure die Entfernung der organischen Verbindungen aus dem Wasser durch die Behandlung mit Ozon behindern, weil Carbonat als Radikalfänger wirkt und damit den Abbau organischer Verbindungen über radikalische Zwischenstufen behindert: Dies berichten Hoigne und Bader in Wat. Res., Band 10, 1976, Seite 377 ff. und Gurol und Watistas in Wat. Res., Band 21, 1987, Seite 895 bis 900.

Für Wasser, das organische Verbindungen und zudem gelöste Carbonate oder Kohlensäure enthält, ergibt sich damit die Situation, dass die Behandlung mit Ozon im alkalischen pH-Bcreich durch die Carbonationen behindert wird. Im sauren pH-Bereich führt die Behandlung mit Ozon jedoch gemäß den Aussagen des Standes der Technik nicht zum vollständigen Abbau der organischen Verbindungen sondem dazu, dass Verbindungen wie z. B. Oxalsäure bestehen bleiben. In beiden Fällen ist damit ein vollständiger Abbau der organischen Verbindungen und damit das TOC zu anorganischen Abbauprodukten wie z. B. Kohlendioxid und Wasser durch Behandlung mit Ozon gemäß dem Stand der Technik nicht möglich.

Der vorliegenden Erfindung liegt daher die Aufgabe zugrunde, ein Verfahren zur Reduktion des Gehaltes an organischen Verbindungen in Wasser, das gelöste Kohlensäure oder Carbonate enthält, zur Verfügung zu stellen.

Für den Fall, dass das Wasser gelöstes Kochsalz enthält, liegt der vorliegenden Erfindung außerdem die Aufgabe zugrunde, ein Verfahren zur Reduktion des Gehaltes an organischen Verbindungen in dem Wasser, das gelöste Kohlensäure oder Carbonate enthält, auf ein so geringes Maß zur Verfügung zu stellen, dass das im Wasser gelöste Kochsalz zur Herstellung von Chlor nach elektrolytischen Verfahren dienen kann.

Die erfindungsgemäße Aufgabe wird gelöst durch ein Verfahren zur Behandlung von Wasser, das einen TOC von mehr als 2 ppm aufweist und mindestens 0,1 Gew.-% gelöste Kohlensäure oder Carbonate enthält, mit Ozon, dadurch gekennzeichnet, dass die Behandlung bei einer Temperatur von 10 bis 130 °C und bei einem absoluten Druck von 0,5 bis 3 bar durchgeführt wird und dass das Wasser, das dem Verfahren zugeführt wird, einen pH-Wert von 2 bis 11 aufweist und dass die Behandlung über einen Zeitraum von 1 Minute bis zu 10 Stunden erfolgt.

Es wurde außerdem gefunden, dass das erfindungsgemäß behandelte Wasser, falls es gelöstes Kochsalz enthält, der Herstellung von Chlor und Natronlauge durch Elektrolyse des Kochsalzes dienen kann. Insbesondere kann die Herstellung des Chlors nach dem bekannten Membranverfahren erfolgen. Dabei wird das Verfahren nicht durch gegebenenfalls in sehr geringer Konzentration noch vorhandene Verunreinigungen beeinträchtigt, insbesondere ist die Standzeit der Membranen im Vergleich zur Verwendung von Kochsalzlösungen gleich, die durch Auflösung von Kochsalz in völlig reinem Wasser gewonnen werden.

Das erfindungsgemäße Verfahren zur Behandlung von Wasser mit Ozon ist besonders wirtschaftlich, verfahrenstechnisch nicht aufwendig und umweltfreundlich. Es ist kein hoher Überdruck erforderlich. Es ist kein Katalysator erforderlich. Es ist keine UV-Bestrahlung erforderlich. Es sind keine weiteren Chemikalien, wie z. B. Wasserstoffperoxid, erforderlich. Selbstverständlich können diese Maßnahmen jedoch zusätzlich durchgeführt werden.

Das erfindungsgemäße Verfahren erlaubt die Reduktion des TOC im Wasser auf unter 1 ppm.

Das erfindungsgemäß mit Ozon behandelte Wasser ist außerdem so rein, dass es direkt in Oberflächengewässer eingeleitet werden kann, ohne dass eine weitere Reinigung erforderlich wäre. Damit ist eine wirtschaftliche und ökologisch günstige Möglichkeit der Aufarbeitung und Entsorgung von Wasser. das einen TOC von mehr als 2 ppm aufweist und daneben gelöste Kohlensäure oder Carbonate enthält, gegeben.

Erfindungsgemäß beträgt der TOC des Wassers vor der Behandlung mit Ozon mehr als 2 ppm, bevorzugt mehr als 5 ppm, besonders bevorzugt mehr als 10 ppm.

Die Ermittlung des TOC erfolgt erfindungsgemäß in Anlehnung an DIN 38 409 - H 3 mit dem Gerät TOC 500 der Firma Shimadzu über eine Messung des Gehaltes an anorganischem Kohlenstoff (TIC) und des Gehaltes an anorganischem oder organischem Kohlenstoff (TC) der Wasserprobe. Ein konstanter Strom hochreiner, kohlendioxidfreier Luft dient dabei als Trägergas. Zur TC-Messung wird eine definierte Menge der zu analysierenden Probe in die TC-Verbrennungsröhre injiziert und dort bei 680°C an einem TC-Katalysator verbrannt. Das entstandene Kohlendioxid wird nach Abkühlung und Trocknung in einem Infrarot-Analysator detektiert. Zur TIC-Messung wird die Probe mit Phosphorsäure angesäuert und das entstandene Kohlendioxid wird aus der Probe ausgetrieben und wie oben detektiert. Der TOC berechnet sich dann aus den gemessenen TIC- und TC-Werten wie folgt: TOC=TC-TIC.

Erfindungsgemäß beträgt der Gehalt an Kohlensäure oder Carbonaten im Wasser mindestens 0,1 Gew.-% berechnet als Carbonat ($CO_3^{2-}$). Bevorzugt beträgt er mindestens 0,3 Gew.-%, besonders bevorzugt mindestens 1,0 Gew.-%.

Die erfindungsgemäße Behandlung mit Ozon findet bei einer Temperatur von 10 bis 130 °C, bevorzugt bei 20 bis 100 °C, besonders bevorzugt bei 60-90 °C statt.

Die erfindungsgemäße Behandlung mit Ozon findet bei einem absoluten Druck von 0,5 bis 3 bar, bevorzugt von 1 bis 2 bar, besonders bevorzugt bei 1,2 bis 1,8 bar statt.

Das Wasser, das dem erfindungsgemäßen Verfahren zur Behandlung mit Ozon zugeführt wird, hat einen pH-Wert von 2 bis 11, bevorzugt hat es einen pH-Wert von 3 bis 11, besonders bevorzugt hat es einen pH-Wert von 5 bis 9, ganz besonders bevorzugt hat es einen pH-Wert von 5,5 bis 7. Der pH-Wert wird bei 20°C gemessen.

Eine besonders bevorzugte Ausführungsform der Erfindung ist dadurch gegeben, dass der pH-Wert des Wassers, das dem Verfahren zur Behandlung mit Ozon zugeführt wird, kleiner als 7 ist und einen solchen Wert hat, dass er nach der Behandlung des Wassers mit Ozon einen Wert über 7,5 hat. Dieser Wechsel des pH-Wertes vom sauren in den basischen Bereich im Verlauf der Behandlung mit Ozon führt zu einem besonders effektiven Abbau des TOC im Wasser. Um diesen Wechsel des pH-Wertes vom sauren in den basischen Bereich zu erreichen, muss in Abhängigkeit des Carbonatgehaltes des Wassers und des gegebenenfalls vorhandenen Gehaltes an anderen Substanzen, die im Verlauf der Behandlung des Wassers mit Ozon zu einer pH-Wert-Änderung führen, der pH-Wert des Wassers, das dem Verfahren zur Behandlung mit Ozon zugeführt wird, eingestellt werden.

Die erfindungsgemäße Behandlung mit Ozon erfolgt über einen Zeitraum von 1 Minute bis zu 10 Stunden, bevorzugt von 6 Minuten bis 2 Stunden, besonders bevorzugt von 10 Minuten bis 60 Minuten.

Für den Fall, dass das Wasser, das der erfindungsgemäßen Behandlung mit Ozon unterzogen wird, gelöstes Kochsalz enthält, ist eine bevorzugte Ausführungsform der vorliegenden Erfindung ein Verfahren, bei dem nach der Ozonbehandlung des Wassers dieses anschließend der Elektrolyse zur Herstellung von Chlor zugeführt wird. Dabei wird die Elektrolyse bevorzugt nach dem Membranverfahren durchgeführt. Das Wasser, das der erfindungsgemäßen Behandlung mit Ozon unterzogen wird enthält beispielsweise 2 bis 20 Gew.-% Kochsalz. Bevorzugt enthält es 4 bis 12 Gew.-% Kochsalz.

Die Herstellung von Chlor durch Elektrolyse von Kochsalz ist beispielsweise beschrieben in Ullmann's Encyclopedia of Industrial Chernistry. Band A 6, 5. Auflage 1986, Seite 401 bis 477. Insbesondere wird hier auch das besonders vorteilhafte Membranverfahren auf den Seiten 437 bis 450 beschrieben.

Voraussetzung für die Verwertung des Kochsalzes im Abwasser der Polycarbonatherstellung durch Elektrolyse ist der Abbau der im Abwasser enthaltenen Organika auf Werte unter ca. 1 ppm. Dies gilt insbesondere, wenn das besonders vorteilhafte Membranverfahren zur Chloralkalielektrolyse eingesetzt werden soll.

Bevorzugt ist das Wasser, das der erfindungsgemäßen Behandlung mit Ozon unterzogen wird, das Abwasser der Polycarbonatherstellung nach dem Phasengrenzflächenverfahren, besonders bevorzugt handelt es sich dabei um Abwasser aus der Herstellung von Bisphenol-A-Polycarbonat nach dem Phasengrenzflächenverfahren.

Die Temperatur des Wassers, das der Behandlung mit Ozon zugeführt wird, kann beispielsweise mit Hilfe eines Wärmetauschers auf den gewünschten Wert eingestellt werden.

Der pH-Wert des Wassers, das der Behandlung mit Ozon zugeführt wird, kann beispielsweise durch Zugabe einer Säure wie z.B. Salzsäure oder einer Lauge wie z. B. Natronlauge auf den gewünschten Wert eingestellt werden.

Die Durchmischung des Wassers mit dem im Ozongenerator erzeugten Ozon sollte zur optimalen Reaktionsführung möglichst intensiv erfolgen. Hierzu ist prinzipiell jede beliebige Form der Gasverteilung möglich, wie z.B. die Verwendung von Ultraschall, Glasfritten oder üblichen Injektoren.

Die Oxidation des Abwassers mit Ozon erfolgt bevorzugt in einem kontinuierlich geführten Prozess, wobei bevorzugt mehrere Reaktionskolonnen hintereinander geschaltet werden. Für einen möglichst quantitativen Abbau des TOC wird bevorzugt ein Teilstrom des frisch hergestellten Ozons direkt auf die der ersten Kolonne folgenden Kolonnen geleitet.

Eine bevorzugte Ausführungsform der Erfindung ist dadurch gegeben, dass mindestens zwei, insbesondere drei Reaktionskolonnen zur Behandlung mit Ozon eingesetzt werden und dass dabei die Ozonverteilung variiert zwischen einer Verteilung von 1:1 bzw. 1:1:1 (Volumenstrom 1. Kolonne : Volumenstrom 2. Kolonne) je Kolonne bis hin zu 5:1 bzw 5:1:1. Dabei beträgt die Ozonverteilung auf die Reaktionskolonnen bevorzugt 80% auf die erste(n) Kolonne (n) und 20% auf die letzte Kolonne.

Möglicherweise auftretende Spitzenbelastungen des TOC im Wasser lassen sich beispielsweise durch eine Adsorberkolonne, die der Anlage zur Behandlung mit Ozon vorgeschaltet ist, adsorbieren und bei normalem Betriebszustand geregelt der Behandlung mit Ozon zuführen. Die Adsorberkolonne wird bevorzugt nur bei Belastungsspitzen mitbetrieben.

Die Adsorberkolonne ist bevorzugt wie folgt aufgebaut. Die Adsorberkolonne wird im Mantel durch Wasser gekühlt. Dadurch wird eine Betriebstemperatur von 15°C eingestellt. Die Adsorberkolonne ist befüllt mit Adsorbem, die Phenol und Bisphenol gut adsorbieren und pH-abhängig auch wieder desorbieren wie beispielhaft und vorzugsweise einem mikroporösen, nicht funktionalisierten, hydrophilen, hypervernetzten Copolymerisat auf Basis von Styrol und Divinylbenzol oder Aktivkohle als Adsorber.

Mit dem erfindungsgemäßen Verfahren können beispielsweise die Abwässer der Herstellung von Polycarbonat nach dem Phasengrenzflächenverfahren behandelt werden. Das gereinigte Abwasser kann dann zur Verwertung des im Wasser enthaltenen Kochsalzes zur Herstellung von Chlor durch Elektrolyse verwendet werden. Dabei ist es vorteilhaft, die Konzentration des Salzes im Wasser, die beispielsweise 4 bis 12 Gew.-% betragen kann, durch Zugabe von festem Kochsalz auf eine Konzentration von 20 bis 30 Gew.-%, bevorzugt 25 Gew.-%, zu erhöhen. bevor das Wasser der Elektrolyse zugeführt wird. Das bei der Elektrolyse erzeugte Chlor und die Natronlauge können dem Verfahren zur Herstellung von Polycarbonat nach dem Phasengrenzflächenverfahren wieder zugeführt werden, nachdem das Chlor mit Kohlenmonoxid zu Phosgen umgesetzt wurde und die Natronlauge beispielsweise zur Herstellung von Bisphenolatlösungen eingesetzt wurde.

Bei den organischen Verbindungen, die die TOC-Belastung des Wasser ausmachen, kann es sich um beliebige organische Verbindungen handeln. Es können dies sowohl aliphatische als auch aromatische Verbindungen sein. Die Verbindungen können beliebige Heteroatome enthalten. Im Falle der Behandlung von Abwässern aus der Polycarbonatproduktion bestehen die organischen Verbindungen im wesentlichen aus Phenolen (z.B. unsubstituiertes Phenol oder Alkylphenole oder Arylphenole oder Bisphenolc wie z. B. Bisphenol A) und Aminen (z.B. Triethylamin, Ethylpiperidin).

Das im erfindungsgemäßen Verfahren eingesetzte Ozon wird nach bekannten Verfahren beispielsweise aus Luft oder aus Sauerstoff hergestellt. Dabei entstehen Gemische von Ozon in Luft bzw. in Sauerstoff, die beispielsweise 40 bis 150 g Ozon pro Kubikmeter Gas enthalten und die als solche eingesetzt werden können. Höhere Konzentrationen an Ozon lassen sich durch spezielle Anreicherungsmethoden (Adsorptionsverfahren oder Desorbtionsverfahren) erzeugen.

Nicht verbrauchtes Ozon, das z. B. im Abgas der Anlage zur Behandlung des Wassers mit Ozon enthalten ist, kann in einem Restozonvemichter thermisch oder katalytisch zersetzt werden.

Weitere bevorzugte Ausführungsformen der vorliegenden Erfindung ergeben sich dadurch, dass vor, während oder nach der Behandlung mit Ozon zusätzlich eine Behandlung mit Wasserstoffperoxid erfolgt. Bevorzugt erfolgt die Behandlung mit Wasserstoffperoxid gleichzeitig mit der Behandlung mit Ozon.

Weitere bevorzugte Ausführungsformen der vorliegenden Erfindung ergeben sich dadurch, dass vor, während oder nach der Behandlung mit Ozon zusätzlich eine Behandlung durch UV-Strahlung erfolgt. Bevorzugt erfolgt die Behandlung mit UV-Strahlung gleichzeitig mit der Behandlung mit Ozon.

Weitere bevorzugte Ausführungsformen der vorliegenden Erfindung ergeben sich dadurch, dass vor, während oder nach der Behandlung mit Ozon zusätzlich eine Behandlung mit Wasserstoffperoxid und mit UV-Strahlung erfolgt. Bevorzugt erfolgt die Behandlung mit Wasserstoffperoxid und mit UV-Strahlung gleichzeitig mit der Behandlung mit Ozon.

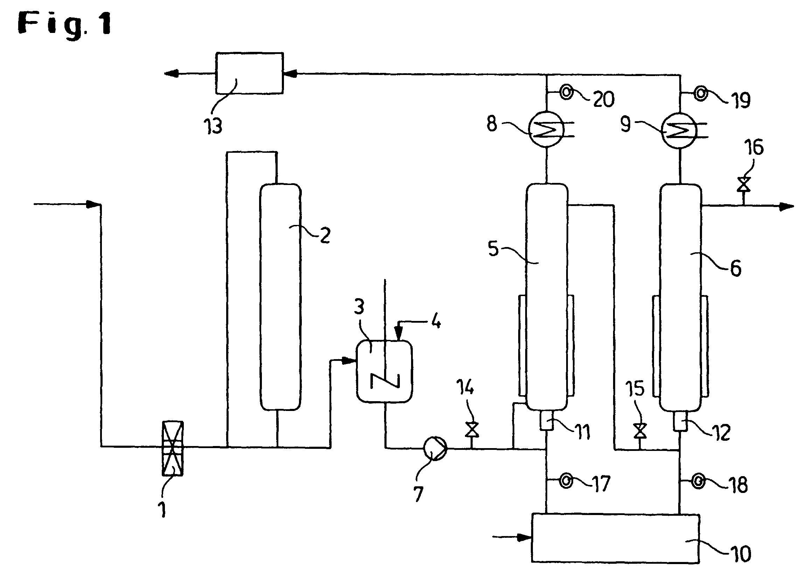

Die Erfindung wird nachfolgend anhand einer eine bevorzugte Ausführungsform darstellenden Zeichnung (Fig. 1) erläutert.

Das Wasser wird durch den Wärmetauscher 1 auf die gewünschte Temperatur gebracht. Die Adsorberkolonne 2 wird nur dann durchströmt, wenn der TOC-Gehalt außergewöhnlich hoch ist. Hierzu sind entsprechende Ventile vorhanden. Bei niedrigem TOC-Gehalt kann dann der Adsorber ebenfalls durchströmt werden, um den TOC wieder zu desorbieren. Das entsprechend temperierte Wasser wird zur Einstellung des pH-Wertes im Rührkessel 3 mit Salzsäure 4 vermischt. Die Behandlung mit Ozon erfolgt danach in den Kolonnen 5 und 6. Aufgrund des hohen Korrosionspotentiales des Ozon-Sauerstoff Gemisches in Wasser bestehen beide Kolonnen bevorzugt aus Titan. Das Wasser wird durch die Pumpe 7 gefördert. Die Kolonnen sind temperierbar und sind per Überlauf miteinander verbunden. Die Wärmetauscher 8 und 9 dienen dazu, möglicherweise mit dem Gasstrom mitgerissenes (abgestripptes) Wasser wieder zu kondensieren. Das Ozon wird im Ozongenerator 10 aus Sauerstoff erzeugt und dem Abwasser über je eine Düse 11 und 12 am Eingang der Kolonnen beigemischt. Nicht verbrauchtes Ozon wird im Restozonvemichter 13 thermisch, bevorzugt bei 250 bis 300°C, vernichtet.

Zur analytischen Überprüfung der Versuche wurden drei Probenahmestellen 14 (Nullprobe), 15 (nach der esten Kolonne) und 16 (nach der zweiten Kolonne) zur Entnahme des behandelten Abwassers installiert. Die Ozonkonzentration wird nach dem Ozongenerator und nach den Wärmetauschern 8 und 9 durch die Meßstellen 17, 18, 19 und 20 bestimmt.

Die Erfindung wird nachfolgend durch Beispiele erläutert.

In der in Fig. 1 wiedergegebenen Pilotanlage wurde das Abwasser der Herstellung von Bisphenol-A-Homopolycarbonat nach dem Phasengrenzflächenverfahren mit verschiedenen Ozonmengen bei unterschiedlicher Temperatur und unterschiedlichen pH-Werten behandelt. Die genauen Versuchsbedingungen und Ergebnisse sind den Tabellen 1 (erfindungsgemäße Beispiele) und 2 (Vergleichsbeispiele) zu entnehmen.

Das Wasser, das dem Prozess zugeführt wurde, enthielt 4 bis 12 Gew.-% Kochsalz und 0,3 bis 1.5 Gew.-% Carbonat. Die TOC-Werte des Wassers sind in den Tabellen angegeben. Der TOC resultierte im wesentlichen aus Phenol und Bisphenol A.

Wie die Versuche belegen ist es besonders vorteilhaft, zum Abbau des TOC auf Werte um ca. 1 ppm, ein Eingangs-pH-Wert von kleiner als 7 einzustellen und eine Temperatur zwischen 60 und 90°C einzustellen. Im Verlauf der Reaktion stellt sich dann über Kolonne 1 ein pH-Wert von über 7 ein und nach Kolonne 2 erhält man einen pH-Wert um 8. Diese pH-Wertänderung beruht darauf, dass das im Abwasser enthaltene $CO_2$ bei der Neutralisation nur zum Teil entweichen kann und erst in den Kolonnen entweicht, so dass damit verbunden ein pH-Wert-Antstieg erfolgt. Damit einher geht ein Wechsel des Reaktionsmechanismus von der Oxidation durch den Angriff von Ozon auf Oxidation durch Angriff mit Hydroxylradikalen. Der Angriff von Ozon führt zu dem Abbau der Phenole und Bildung von Abbauprodukten, die dann durch die Hydroxylradikale abgebaut werden.

## Tabelle 1 (erfindungsgemäße Beispiele)

| Abwasser | Zufuhr ozonhaltiges Gas zu Kolonne 1 | Zufuhr ozonhaltiges Gas zu Kolonne 2 | Ozonkonzentration im ozonhaltigen Gas | TOC an 14 | TOC an 15 | TOC an 16 | pH an14 | pH an 15 | pH an 16 | Temperatur in Kolonne 1/Temperatur in Kolonne 2 |
|---|---|---|---|---|---|---|---|---|---|---|
| l/h | l/h | l/h | $g/m^3$ | mg/l | mg/l | mg/l | | | | °C |
| 100 | 350 | 100 | 102 | 7,5 | 2,5 | 1,7 | 7,2 | 8,2 | 8,5 | 80/76 |
| 100 | 350 | 100 | 100 | 5 | 2,3 | 1,3 | 7,1 | 8,2 | 8,5 | 80/75 |
| 100 | 280 | 100 | 110 | 4,9 | 1,8 | 0,8 | 6,9 | 8,1 | 8,5 | 81/77 |
| 100 | 350 | 90 | 103 | 6,6 | 3,2 | 1,2 | 7 | 7,8 | 8,4 | 82/77 |
| 100 | 350 | 90 | 102 | 8,5 | 1,8 | 1,1 | 7 | 8,3 | 8,5 | 81/77 |
| 100 | 350 | 100 | 99,4 | 6,6 | 1,7 | 0,7 | 6,7 | 7,8 | 8,4 | 84/79 |
| 100 | 350 | 100 | 96 | 9,7 | 2 | 0,7 | 6,8 | 7,7 | 8,3 | 83/79 |
| 100 | 500 | 100 | 103 | 13,5 | 4,3 | 1,4 | 6,4 | 7,7 | 8,2 | 93/80 |
| 100 | 310 | 70 | 111 | 7,1 | 1,2 | 0,6 | 6,7 | 7,8 | 8,3 | 82/79 |
| 100 | 350 | 90 | 103 | 8,3 | 1,7 | 0,6 | 6,6 | 7,9. | 8,3 | 82/80 |
| 100 | 350 | 100 | 101 | 7 | 3,4 | 2,4 | 6,1 | 6,8 | 5,7 | 73/71 |
| 100 | 350 | 100 | 100 | 5,5 | 0,9 | <0,5 | 6,3 | 6,9 | 6 | 74/71 |
| 100 | 350 | 100 | 101 | 8,2 | 1,9 | 0,6 | 6,4 | 6,9 | 6,1 | 74/70 |
| 100 | 350 | 100 | 102 | 5,4 | 1,2 | 0,9 | 4,6 | 6 | 6,3 | 95/76 |
| 100 | 350 | 100 | 99,4 | 4 | 1,4 | 0,6 | 6 | 6,4 | 6,4 | 55/59 |

EP 1 200 359 B1

## Tabelle 1 (Fortsetzung)

| Abwasser | Zufuhr ozonhaltiges Gas zu Kolonne 1 | Zufuhr ozonhaltiges Gas zu Kolonne 2 | Ozonkonzen-tration im ozonhaltigen Gas | TOC an 14 | TOC an 15 | TOC an 16 | pH an14 | pH an 15 | pH an 16 | Temperatur in Kolonne 1/Temperatur in Kolonne 2 |
|---|---|---|---|---|---|---|---|---|---|---|
| l/h | l/h | l/h | g/m$^3$ | mg/l | mg/l | mg/l | | | | °C |
| 100 | 350 | 100 | 101 | 5,7 | 1,1 | <0,5 | 6 | 7,2 | 8,1 | 80/82 |
| 100 | 350 | 100 | 101 | 2,1 | 1 | <0,5 | 6,1 | 6,9 | 7,9 | 70/76 |
| 100 | 350 | 100 | 105 | 11,3 | 5,2 | 1,2 | 6,3 | 6,9 | 7,8 | 71/74 |
| 100 | 350 | 100 | 99,6 | 5,4 | 2,2 | 1,4 | 6,3 | 7 | 7,9 | 73/76 |
| 100 | 350 | 100 | 100 | 9,8 | 1,6 | 0,9 | 6,3 | 6,7 | 6,8 | 73/77 |
| 100 | 350 | 100 | 102 | 3,1 | 2,5 | 0,5 | 5,6 | 6 | 6,4 | 73/65 |
| 100 | 350 | 100 | 99,4 | 11,3 | 1,8 | 0,7 | 6,1 | 6,5 | 7 | 91/91 |
| 100 | 350 | 100 | 127 | 10,7 | 1,5 | <0,5 | 6,3 | 7,3 | 7,4 | 90/91 |
| 100 | 350 | 100 | 111 | 11,1 | 1,9 | 0,7 | 6,1 | 7 | 8,4 | 91/93 |
| 100 | 350 | 100 | 100 | 6,6 | 1,4 | 0,9 | 6,4 | 7,8 | 8,5 | 91/93 |
| 100 | 350 | 100 | 108 | 9,1 | 1,2 | <0,5 | 6,4 | 7,8 | 8,5 | 90/91 |
| 100 | 350 | 100 | 102 | 10,6 | 1,5 | <0,5 | 6,4 | 7,4 | 8,5 | 90/92 |

EP 1 200 359 B1

## Tabelle 2:

(Vergleichsbeispiele; pH-Wert des Wasser vor Ozonbehandlung : 12, Temperatur des Wassers vor Ozonbehandlung : 60°C)

| Abwasser | Zufuhr ozonhaltiges Gas zu Kolonne 1 | Zufuhr ozonhaltiges Gas zu Kolonne 2 | Ozonkonzentration im ozonhaltigen Gas | TOC an 14 | TOC an 15 | TOC an 16 |
|---|---|---|---|---|---|---|
| l/h | l/h | l/h | $g/m^3$ | mg/l | mg/l | mg/l |
| 400 | 400 | 100 | 100 | 12,4 | 9,3 | 8,7 |
| 500 | 600 | 100 | 100 | 11,5 | 10 | 8,7 |
| 500 | 350 | 100 | 140 | 21,5 | 17,8 | 11,1 |
| 500 | 350 | 100 | 100 | 9,5 | 8,7 | 6,4 |
| 700 | 500 | 100 | 100 | 25,6 | 22,7 | 23,5 |
| 700 | 700 | 100 | 100 | 27,9 | 19,9 | 18,1 |

**Patentansprüche**

1. Verfahren zur Behandlung von Wasser, das einen TOC von mehr als 2 ppm aufweist und mindestens 0,1 Gew.-

% gelöste Kohlensäure oder Carbonate enthält, mit Ozon, **dadurch gekennzeichnet, dass** die Behandlung bei einer Temperatur von 10 bis 130 °C und bei einem absoluten Druck von 0,5 bis 3 bar durchgeführt wird und dass der pH-Wert des Wassers, das dem Verfahren zugeführt wird, 2 bis 11 beträgt und dass die Behandlung über einen Zeitraum von 1 Minute bis 10 Stunden erfolgt.

2. Verfahren gemäß Anspruch 1, wobei das Wasser 2 bis 20 Gew.-% Kochsalz enthält.

3. Verfahren zur Herstellung von Chlor durch Elektrolyse von Kochsalz, **dadurch gekennzeichnet, dass** das Kochsalz dem Elektrolyseverfahren in Form einer wässrigen Lösung zugeführt wird, die erhalten wird durch Behandlung von Wasser, das einen TOC von mehr als 2 ppm und einen Kochsalzgehalt von 2 bis 20 Gew.-% aufweist und mindestens 0,1 Gew.-% gelöste Kohlensäure oder Carbonate enthält, mit Ozon, wobei die Behandlung mit Ozon bei einer Temperatur von 10 bis 130 °C und bei einem absoluten Druck von 0,5 bis 3 bar durchgeführt wird und wobei der pH-Wert des Wassers, das dem Verfahren zur Behandlung mit Ozon zugeführt wird, 2 bis 11 beträgt und wobei die Behandlung mit Ozon über einen Zeitraum von 1 Minute bis 10 Stunden erfolgt.

4. Verfahren gemäß Anspruch 3, wobei die Elektrolyse nach dem Membranverfahren erfolgt.

5. Verfahren gemäß einem der Ansprüche 1 bis 4, wobei das Wasser, das der Behandlung mit Ozon unterzogen wird, das Abwasser der Herstellung von Polycarbonat nach dem Phasengrenzflächenverfahren ist.

6. Verfahren gemäß Anspruch 5, wobei das Wasser, das der erfindungsgemäßen Behandlung mit Ozon unterzogen wird, das Abwasser der Herstellung von Bisphenol-A-Polycarbonat nach dem Phasengrenzflächenverfahren ist.

7. Verfahren gemäß einem der Ansprüche 1 bis 6, wobei der pH-Wert des Wassers, das dem Verfahren zur Behandlung mit Ozon zugeführt wird, kleiner als 7 ist und einen solchen Wert hat, dass er nach der Behandlung des Wassers mit Ozon einen Wert über 7,5 hat.

**Claims**

1. Process for the treatment, with ozone, of water which has a TOC of more than 2 ppm and contains at least 0.1 wt. % of dissolved carbonic acid or carbonates, **characterised in that** the treatment is carried out at a temperature of 10°C to 130°C and at an absolute pressure of 0.5 to 3 bar and that the pH value of the water which is supplied to the process is 2 to 11 and that the treatment takes place over a period of from 1 minute up to 10 hours.

2. Process according to claim 1, wherein the water contains 2 to 20 wt.% common salt.

3. Process for the production of chlorine by electrolysis of common salt, **characterised in that** the common salt is supplied to the electrolysis process in the form of an aqueous solution, which is obtained by the treatment, with ozone, of water which has a TOC of more than 2 ppm and a common salt content of 2 to 20 wt.% and contains at least 0.1 wt.% of dissolved carbonic acid or carbonates, wherein the treatment is carried out at a temperature of 10°C to 130°C and at an absolute pressure of 0.5 to 3 bar and wherein the pH value of. the water which is supplied to the process for the treatment with ozone is 2 to 11 and wherein the treatment with ozone takes place over a period of from 1 minute up to 10 hours.

4. Process according to claim 3, wherein the electrolysis is carried out by the membrane process.

5. Process according to one of claims 1 to 4, wherein the water which is subjected to the treatment with ozone is the waste water from the production of polycarbonate by the phase interface process.

6. Process according to claim 5, wherein the water which is subjected to the treatment with ozone according to the invention is the waste water from the production of bisphenol A polycarbonate by the phase interface process.

7. Process according to one of claims 1 to 6, wherein the pH of the water supplied to the process for the treatment with ozone has a value which is less than 7 and is such that, after the treatment of the water with ozone, the pH value is more than 7.5.

**EP 1 200 359 B1**

**Revendications**

1. Procédé pour traiter par l'ozone une eau à une teneur en carbone organique total supérieure à 2 ppm et contenant au moins 0,1 % en poids d'acide carbonique ou de carbonates en solution, **caractérisé en ce que** le traitement est réalisé à une température de 10 à 130°C sous une pression absolue de 0,5 à 3 bar, **en ce que** le pH de l'eau envoyée aux opérations est de 2 à 11 et **en ce que** le traitement dure 1 min à 10 h.

2. Procédé selon la revendication 1, dans lequel l'eau contient 2 à 20 % en poids de chlorure de sodium.

3. Procédé pour préparer le chlore par électrolyse du chlorure de sodium, **caractérisé en ce que** le chlorure de sodium envoyé à l'opération d'électrolyse est à l'état de solution aqueuse obtenue par traitement à l'ozone d'une eau à une teneur en carbone organique total de plus de 2 ppm et une teneur en chlorure de sodium de 2 à 20 % en poids et qui contient au moins 0,1 % en poids d'acide carbonique ou de carbonates à l'état dissous, le traitement par l'ozone étant réalisé à une température de 10 à 130°C et sous une pression absolue de 0,5 à 3 bar, le pH de l'eau envoyée au traitement par l'ozone étant de 2 à 11 et le traitement par l'ozone durant de 1 min à 10 h.

4. Procédé selon la revendication 3, dans lequel l'électrolyse est réalisée par le procédé avec membranes.

5. Procédé selon l'une des revendications 1 à 4, dans lequel l'eau soumise au traitement par l'ozone est une eau résiduaire de la fabrication d'un polycarbonate par le procédé à l'interface de phases.

6. Procédé selon la revendication 5, dans lequel l'eau envoyée au traitement par l'ozone selon l'invention est une eau résiduaire de la fabrication du polycarbonate du bisphénol-A par le procédé à l'interface de phases.

7. Procédé selon l'une des revendications 1 à 6, dans lequel le pH de l'eau envoyée au traitement par l'ozone est inférieur à 7 et se situe à un niveau tel qu'après traitement de l'eau par l'ozone il sera supérieur à 7,5.

# Fig. 1

EP 1 200 359 B1